# EUROPÄISCHE PATENTSCHRIFT

(11) **EP 2 213 805 B1**
(45) Veröffentlichungstag und Bekanntmachung des Hinweises auf die Patenterteilung: **02.01.2013**
(21) Anmeldenummer: 09001411.9
(22) Anmeldetag: 02.02.2009
(51) Int. Cl.: E04B 1/76, E04F 13/00

(54) **Verfahren zur Außendämmung eines Gebäudes**
Method for external insulation of a building
Procédé d'isolation extérieure d'un bâtiment

(43) Veröffentlichungstag der Anmeldung: 04.08.2010
(73) Patentinhaber: Franz Sahler GmbH, 54343 Föhren (DE)
(72) Erfinder: Sahler, Franz, 54343 Föhren (DE)
(74) Vertreter: Hartz, Nikolai

(56) Entgegenhaltungen:
- EP-A- 1 637 665
- DE-A1- 19 544 713

## Beschreibung

Die vorliegende Erfindung betrifft ein Verfahren zur Außendämmung eines Gebäudes.

Eine Verfahren zur Wärmedämmung von Gebäuden bei dem das Gebäude nicht einem Laserscanner vermessen wird, ist aus der EP-A 1 637 665 bekannt.

Wärmeverluste durch Außenwände und Dächer sind in bestehenden, ungedämmten Gebäuden verantwortlich für mehr als 70% der Wärmeverluste. Eine Verbesserung der Wärmedämmung eröffnet ein hohes Energieeinsparungspotential.

Verfahren zur Außendämmung eines Gebäudes sind bekannt. Herkömmlicherweise wird auf der Außenwand zunächst mit einem Klebemörtel eine Dämmschicht aus Dämmplatten aufgebracht, die anschließend mit einer Armierung stabilisiert und schließlich mit einer Putzschicht verblendet wird.

Das Aufbringen der Dämmschicht erfordert, dass die Außenwand des Gebäudes zunächst vermessen wird. Anhand der Messung werden vor Ort kleinkonfektionierte Dämmplatten aus geschäumtem Polystyrol in Standardgrößen von beispielsweise 50x100 cm ausgewählt und gegebenenfalls zugeschnitten. Die Dämmplatten werden anschließend an der Außenwand mit einem mineralischen Klebemörtel oder einem Polyurethan-Klebeschaum befestigt.

Die Gesamtkosten für eine Außendämmung werden entscheidend von den Lohnkosten bestimmt, die den hohen Zeitaufwand für das Konfektionieren und Anbringen der Dämmplatten wiederspiegeln. Die Anbringung der Dämmplatten beansprucht typischerweise 40 bis 50 % des gesamten Zeitaufwands für die Außendämmung eines Gebäudes. Dieser Zeitaufwand kann erheblich steigen durch aufwändiges Anpassen oder Nacharbeiten im Bereich entlang der Kanten der Außenwand oder entlang von Wandöffnungen. Dadurch entsteht ein schwierig zu kalkulierendes Kostenrisiko, insbesondere wenn umfangreiche Dämmarbeiten im Bereich der Dachsparren notwendig sind, oder wenn eine große Anzahl von Eckanbindungen erstellt werden müssen. Eine weitere Schwierigkeit tritt auf, wenn beispielsweise bei Altfassaden Unebenheiten vorliegen, die ausgeglichen werden müssen. Eine Korrektur durch eine Anpassung der Klebeschicht kann nur im Bereich von 1 bis 2 cm angewendet werden. Größere Abweichungen können mit herkömmlicher Technik nicht korrigiert werden.

Die Außendämmung ist dann am wirksamsten, wenn Dämmplatten ohne Unterbrechungen rund um das Gebäude angebracht werden, so dass Wärmebrücken vermieden werden. Eine optimale Außendämmung ist aber herkömmlicherweise nicht zu erreichen, weil mit herkömmlichen Verfahren durch die Verwendung von kleinkonfektionierten Platten und dem oft ungenauen Zuschnitt eine große Anzahl auch großer Fugen nicht zu vermeiden ist.

Aus der DE 195 44 713 ist ein optoelektronisches Verfahren für den Zuschnitt und die Montage von Dämmplatten bekannt, die vor der Montage bereits mit der Putzschicht versehen werden. Das Verfahren ist in der Praxis nicht anwendbar, da es nicht möglich ist mit den offenbarten Mitteln Dämmplatten herzustellen, die an einer Fassade befestigt werden können, da aufgrund des Gewichts der Platten eine herkömmliche Befestigung nicht möglich ist. Insbesondere große Platten lassen sich aufgrund des Gewichts nach diesem Verfahren nicht verarbeiten. Außerdem bieten die offenbarten optoelektronischen Verfahren keine brauchbare Auflösung, so dass ein zusätzlicher Verfugungsschritt erforderlich ist, der zu einer großen Anzahl von Wärmebrücken führt.

### Offenbarung der Erfindung

Es ist daher Aufgabe der Erfindung ein Verfahren zur Außendämmung eines Gebäudes bereitzustellen, mit dem der Arbeitsaufwand für das Anbringen einer Dämmschicht auf der Grundlage von Dämmplatten reduziert werden kann und gleichzeitig die Qualität der Dämmschicht durch Vermeidung von Wärmebrücken verbessert werden kann.

Diese Aufgabe wird erfindungsgemäß gelöst mit einem Verfahren zur Außendämmung eines Gebäudes, wobei das Verfahren die folgenden Schritte umfasst:
(a) Erfassung der dreidimensionalen Geometrie zumindest eines Teils der Außenseite von mindestens einer Außenwand mit einer Erfassungseinrichtung;
(b) Ermittlung von Basisdaten, die die dreidimensionale Geometrie der zu dämmenden Außenwand definieren;
(c) Ermittlung von Dämmschichtdaten unter Verwendung der Basisdaten, wobei die Dämmschichtdaten zumindest die Größe und Innenoberfläche der herzustellenden Dämmschicht definieren, wobei die Dämmschicht auf der Grudlage der Basisdaten modelliert wird;
(d) Ermittlung von Dämmkörperdaten aus den Dämmschichtdaten, wobei die Dämmkörperdaten die dreidimensionale Geometrie eines Dämmkörpers definieren;
(e) Herstellung von Dämmkörpern unter Verwendung der Dämmkörperdaten;
(f) Befestigung der Dämmkörper auf den Außenwänden des Gebäudes unter Verwendung von Dämmschichtdaten.

Die vorliegende Erfindung beruht auf der Erkenntnis, dass die Arbeitszeit für das Anbringen einer Dämmschicht auf der Grundlage von Dämmplatten drastisch reduziert werden kann und gleichzeitig die Qualität der Dämmschicht durch Vermeidung von Wärmebrücken wesentlich erhöht werden kann, wenn die Dämmschicht unter Verwendung von Basisdaten, die die dreidimensionale Oberfläche der zu dämmenden Außenflächen definieren, hergestellt wird. Auf der Grundlage der Basisdaten wird eine geeignete Dämmschicht modelliert und gegebenenfalls angepasst. Aus diesem Modell und gegebenenfalls unter Berücksichtigung einer Klebeschicht bzw. von Injektionskanälen sowie anderer Parameter, werden Dämmkörperdaten abgeleitet mit denen ein modulares System aus speziellen und vorzugsweise großen Dämmkörpern hergestellt wird, die mit wenigen Unterbrechungen rund um das Gebäude angebracht werden können, ohne dass Wärmebrücken auftreten und wobei ein Nacharbeiten im Bereich entlang der Kanten der Außenwand oder entlang von Wandöffnungen wegfällt.

### Kurze Beschreibung der Zeichnungen

Weitere Merkmale und Vorteile der Erfindung ergeben sich aus der nachfolgenden Beschreibung, in der eine bevorzugte Ausführungsform eines Verfahren zur Außendämmung eines Gebäudes beschrieben wird

In der Zeichnung zeigen:
Figur 1 eine Schemazeichnung des Aufbaus einer erfindungsgemäßen Außendämmung;
Figur 2 eine Schemazeichnung einer erfindungsgemäßen Dämmung einer Gebäudeaußenwand mit vorkonfektionierten großformatigen Dämmplatten nach dem erfindungsgemäßen Verfahren, wobei die Dämmlatten individuell auf die Fassadensituation angepasst sind.
Figur 3 eine Schemazeichnung einer alternativen Ausführungsform einer erfindungsgemäßen Dämmung einer Gebäudeaußenwand mit vorkonfektionierten großformatigen Dämmplatten nach dem erfindungsgemäßen Verfahren, wobei die Dämmplatten individuell auf die Fassadensituation angepasst sind;
Figur 4 eine Schemazeichnung einer Dämmung einer Gebäudeaußenwand mit herkömmlichen Dämmstoff-Formaten.

### Beschreibung der bevorzugten Ausführungsformen

Das Verfahren der Erfindung umfasst die Erfassung der dreidimensionalen Geometrie zumindest eines Teils der Außenseite von mindestens einer Außenwand mit einer Erfassungseinrichtung. In einer bevorzugten Ausführungsform werden mindestens zwei benachbarte Außenwände erfasst, so dass insbesondere die dreidimensionale Geometrie des Kantenbereich erfasst wird.

Vorzugsweise wird ein 3D-Laserscanner als Erfassungseinrichtung eingesetzt, wobei die Auflösung der Erfassungseinrichtung vorzugsweise im Bereich von höchstens 10 mm liegt. Je höher die Auflösung ist, die mit der Erfassungseinrichtung erzielt wird, umso besser ist es erfindungsgemäß möglich, Wärmebrücken zu vermeiden. Eine Auflösung von höchstens 3 mm ist daher bevorzugt, insbesondere eine Auflösung von höchstens 1 mm.

Mit einer höheren Auflösung wird erreicht, dass die Dämmschichtdaten die aus den die dreidimensionale Geometrie der zu dämmenden Außenwand definierenden Basisdaten ermittelt wird, ein realistisches Modell für die zu erstellende Dämmschicht darstellt. Daher ist es möglich aus den Dämmschichtdaten Dämmkörperdaten zu ermitteln, so dass die erhaltenen Dämmkörper mit wenigen Unterbrechungen rund um das Gebäude angebracht werden können.

Zur Reduzierung von statistischen Fehlern bei der Messung, kann die Erfassung der dreidimensionalen Geometrie der Außenseite der zu dämmenden Gebäudewand mehrmals wiederholt werden. Die Ergebnisse mehrerer Messungen können zu einem Basisdatensatz kombiniert werden.

Ein 3D-Laserscanner kann 3D-Strukturen einer oder mehrerer Gebäudewände mit einer oder mehreren Aufstellungen vermessen werden. Dabei wird der Laserscanner auf die zu vermessenden Gebäudewände ausgerichtet und der Vermessungsvorgang wird innerhalb weniger Minuten durchgeführt. Mit einem einzigen Messvorgang entstehen 3D-Punktewolken mit hoher Dichte, die die Oberflächengeometrie der vermessenen Gebäudewand beschreiben. Dadurch können insbesondere Unregelmäßigkeiten auf der Wandoberfläche, Bauteile, Öffnungen und Kanten- oder Dachbereiche erfasst werden. Vorzugsweise erfolgt die Erfassung der dreidimensionalen Geometrie der Außenseite einer zu dämmenden Gebäudewand von verschiedenen Standpunkten der Erfassungseinrichtung.

In einer Ausführungsform misst der 3D Laserscanner die Distanz zwischen der Erfassungseinrichtung und einem Punkt auf der Gebäudewand nach der Laufzeitmethode. Dabei wird im 3D-Laserscanner der stark gebündelte, pulsierende Laserstrahl mit Hilfe von zwei Spiegeln schnell und systematisch über den gewählten Bereich geschwenkt. Die Erfassungseinrichtung misst die Laufzeit des Laserimpulses von der jeweiligen Oberfläche zurück zum 3D-Laserscanner. Für jeden Laserimpuls kann eine Entfernungsmessung durchgeführt werden, während integrierte optische Codierer die Spiegelwinkel aufzeichnen.

In einer anderen Ausführungsform arbeitet der Laserscanner nach dem Phasendifferenzverfahren, wobei ein kontinuierlicher Laserstrahl verwendet wird. Die Amplitude des ausgesandten Laserstrahls wird mit mehreren sinusförmigen Wellen unterschiedlicher Wellenlänge moduliert. Der entstehende zeitliche Abstand des empfangenen Signals gegenüber dem gesendeten Signal ist eine Folge der Entfernung zum Objekt. Bei gleichzeitiger Betrachtung der Phasenlage des gesendeten und des empfangenen Signals ergibt sich eine Phasendifferenz, die die Bestimmung des Objektabstandes erlaubt.

Um ein ganzes Gebäude zu erfassen, wird die Erfassungseinrichtung gedreht, geneigt oder an verschiedenen Stellen im Gelände aufgestellt. Die aus diesen Messungen resultierenden Positionen werden als Basisdaten für die Weiterverarbeitung gespeichert. Auf diese Weise werden Basisdaten ermittelt, die die dreidimensionale Geometrie der zu dämmenden Außenwand definieren. Vorzugsweise definieren die Basisdaten eine Punktwolke.

Anschließend werden Dämmschichtdaten unter Verwendung der Basisdaten ermittelt, wobei die Dämmschichtdaten zumindest die Größe und Innenoberfläche der herzustellenden Dämmschicht definieren, wobei die Dammschicht auf der Grudlage der Basisdaten modelliert wird. Vorzugsweise betreffen die Dämmschichtdaten außerdem die Dicke der Dämmschicht, die Außenoberfläche der Dämmschicht, und/oder die Injektionskanäle, die zur Anwendung der Klebemörtelschicht dienen.

Zur Ermittlung der Dämmschichtdaten werden die Basisdaten ausgewertet. Die Auswertung kann an irgendeinem Ort erfolgen und ist nicht auf den Ort der Erfassung beschränkt. Beispielsweise können die Basisdaten zur Ermittlung von Dämmschichtdaten über ein Datennetzwerk übertragen werden.

Anhand eines geeigneten Datenverarbeitungsprogramms können die Punktewolken des 3D-Laserscans ganz oder teilweise in 3D-Modelle, 2D-Zeichnungen, Konturen, Profile usw. umgewandelt werden und in einer CAD-Anwendungen weiter verarbeitet wird. Dabei können standardisierte Parameter für die Dicke der Dämmschicht, die Dicke einer Klebeschicht, die Berücksichtigung spezieller Befestigungsmittel oder die Berücksichtigung von bestimmten Strukturen im Bereich entlang der Kanten der Außenwand oder entlang von Wandöffnungen vorgesehen werden. Vorzugsweise wird zumindest eine Klebemörtelschicht bei der Ermittlung von Dämmschichtdaten unter Verwendung der Basisdaten berücksichtigt. Die Dämmschichtdaten definieren zumindest die Größe und Innenoberfläche der herzustellenden Dämmschicht. Vorzugsweise werden bei der Ermittlung der Dämmkörperdaten Injektionskanäle für Klebemörtel berücksichtigt, denn bei der Verklebung von großformatigen Dämmkörpern kann ein rückseitiger Klebeauftrag in der Praxis problematisch sein.

Anschließend werden Dämmkörperdaten aus den Dämmschichtdaten ermittelt, wobei die Dämmkörperdaten die dreidimensionale Geometrie eines Dämmkörpers definieren. Vorzugsweise wird bei der Ermittlung der Dämmkörperdaten die Größe der Dämmkörper im Rahmen vorgegebener Randbedingungen maximiert. Bei der Ermittlung der Dämmkörperdaten sollten Fugen mit einer Breite von mehr als 2 mm, vorzugsweise mehr als 1 mm zwischen benachbarten Dämmkörpern in der Dämmschicht vermieden werden. In einer bevorzugten Ausführungsform gewährleisten die Dämmkörperdaten, dass die daraus hergestellten in der Dämmschicht benachbarten Dämmkörper ineinander greifen.

Bei der Ermittlung der Dämmkörperdaten kann von einer Bibliothek von Standarddämmkörpern ausgegangen werden.

Bei der Ermittlung der Dämmkörperdaten wird die Anzahl der Dämmkörper für die Erstellung der Dämmschicht möglichst niedrig gehalten, so dass Fugen zwischen benachbarten Dämmkörpern in der Dämmschicht vermieden werden. Die Anzahl der Fugen kann dadurch gesteuert werden, dass Dämmkörper mit einer möglichst großen Dimensionierung ermittelt werden. Andererseits kann durch Ermittlung komplexer Dämmkörper in problematischen Bereichen auch mit kleineren Dämmkörpern die Anzahl der Fugen, die herkömmlicherweise anfallen würde, vermindert werden.

Vor der Herstellung der Dämmkörper können vorläufige Dämmkörperdaten über ein Datennetzwerk einem Benutzer zur Kontrolle zugänglich gemacht werden, wobei dann die Herstellung von Dämmkörpern unter Verwendung der von dem Benutzer veränderten Dämmkörperdaten erfolgt.

Anschließend werden die Dämmkörper unter Verwendung der Dämmkörperdaten hergestellt. Die Herstellung erfolgt vorzugsweise ausgehend von großformatigen Rohlingen, beispielsweise im Format von 6 m x 2 m x 1 m, so dass große Dämmkörper erhalten werden können. Vorzugsweise bilden die hergestellten Dämmkörper ein modulares System mit dem eine Dämmschicht mit wenigen Unterbrechungen rund um das Gebäude angebracht werden kann, ohne dass Wärmebrücken auftreten.

Die Herstellung der Dämmkörper erfolgt vorzugsweise automatisch indem die Rohdaten für die Fertigung von Dämmkörpern gesammelt, in Arbeitsschritte sortiert und unter Berücksichtigung von Abhängigkeiten verwaltet werden. Dazu werden Schnittstellen bereitgestellt, die die Dämmkörperdaten, Maße und Materialien wie auch Stücklisten aus einem CAD-System einlesen und zur Bearbeitung bereitstellen. Zusätzlich zu den bereits in Rechnern enthaltenen Merkmalen können ergänzende Informationen eingepflegt werden, die für die Fertigung erforderliche Daten wie Werkzeugbedarf, Spannpläne und Reihenfolge zur Bearbeitung beinhalten. Die automatische Fertigung beinhaltet die Bereitstellung der direkt von den Maschinen zu bearbeitenden Codes (CNC) oder Materialanforderungen, die jeweils von einem Bediener abgerufen werden können.

Die Herstellung der Dämmkörper braucht nicht vor Ort zu geschehen. Vorzugsweise erfolgt die Herstellung der Dämmkörper zentral in einem industriellen Betrieb.

Nach erfolgter Herstellung eines Dämmkörpers Bearbeitung können die verifizierten Ergebnisse evtl. weiter aufbereitet und über weitere Schnittstellen an andere Prozesse übermittelt werden. Neben der jeweiligen auftragsbezogenen Bearbeitung von Daten ist die Archivierung und Standardisierung der Daten ebenfalls möglich. Daher erfolgt die Herstellung von Dämmkörpern vorzugsweise in einem CAM-Verfahren.

Die hergestellten Dämmkörper können als modulares System an die Baustelle geliefert werden, wobei jedes Element des Systems einem bestimmten Montageort auf der zu dämmenden Außenwand zugeordnet ist. Ein Montageplan ist Teil des modularen Systems, das anhand dieses Plans an der Außenwand befestigt wird. Idealerweise bilden die Dämmkörper eine Dämmschicht, die ohne zusätzliche Schneidarbeiten vor Ort montiert werden kann. Auf diese Weise reduziert sich die Arbeitszeit auf die reine Montagezeit.

Die Befestigung kann mit einem herkömmlichen mineralischen Klebemörtel oder einem Polyurethan-Klebeschaum erfolgen. Alternativ können spezielle Befestigungsvorrichtungen eingesetzt werden, wie beispielsweise Tellerdübel. In einer bevorzugten Ausführungsform und insbesondere bei großen Dämmkörpern, werden Injektionskanäle vorgesehen, durch die nach Anlegen des Dämmkörpers an der Fassadenwand, ein Klebemörtel injiziert wird, der sich durch die Injektionskanäle zwischen Innenseite des Dämmkörper und Außenseite des Gebäudes verteilt. Die Dosierung kann durch die definierte Größe der Injektionskanäle durch einfache Intervallschaltung beispielsweise an einer Klebepistole erfolgen.

Nachdem die Dämmkörper auf der Außenwand befestigt wurden, kann ein Aufbringen einer Armierung auf mindestens zwei Dämmkörper erfolgen, wie es herkömmlicherweise zur Stabilisierung der Dämmschicht üblich ist. Anschließend kann eine Putzschicht auf der Armierung vorgesehen werden.

Die Erfindung wird nachfolgend anhand der beigefügten Zeichnungen näher erläutert.

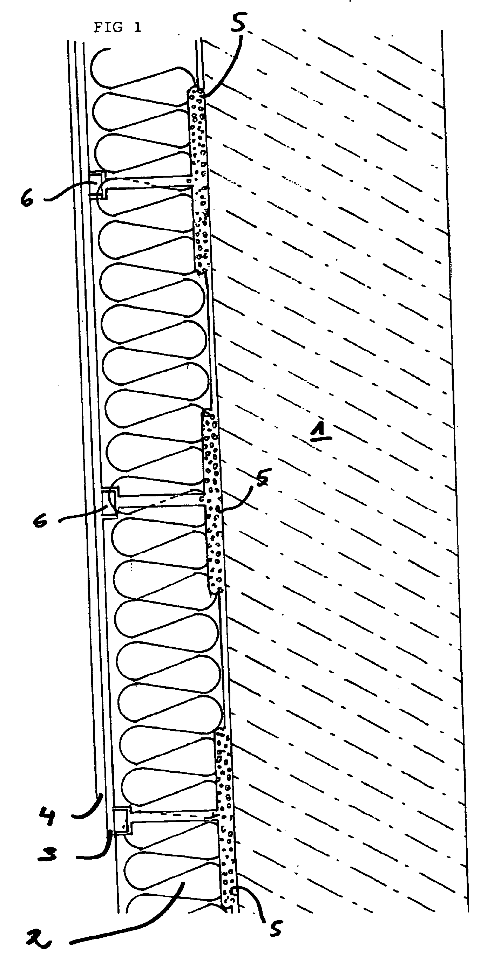

Figur 1 zeigt eine Schemazeichnung des Aufbaus einer erfindungsgemäßen Außendämmung, wobei mit dem Bezugszeichen 1 das Mauerwerk einer Außenwand eines Gebäudes bezeichnet wird. Auf dem Mauerwerk wird eine erfindungsgemäß hergestellte Dämmplatte 2 vorgesehen, die mit einer Armierschicht und Gewebeeinbettung 3 beschichtet wird. Die Dämmplatte 2 umfasst eine Innenoberfläche, die an die Oberfläche des Mauerwerks angepasst ist. Die auf der Außenoberfläche der Dämmplatte vorgesehene Armierschicht und Gewebeeinbettung 3 wird mit einem Oberputz 4 versehen.

Die Dämmplatte 2 ist mit einem Klebemörtel am Mauerwerk befestigt, wobei der Klebemörtel bei der Montage durch Injektionskanäle in hinterfräste Klebetaschen 5 eingebracht wird. Die Öffnung des Injektionskanals wird mit einem Dämmstoff-Verschlussstopfen verschlossen. Bei Verwendung von Injektionskanälen mit hinterfrästen Klebetaschen 5 braucht der Klebemörtel erst dann angewendet zu werden, wenn die Dämmplatte in der endgültigen Position auf dem Mauerwerk positioniert wurde. Gerade bei großdimensionierten Dämmplatten, die eine große Menge an Klebemörtel erfordern, kann auf diese Weise eine einfache und genaue Montage erreicht werden.

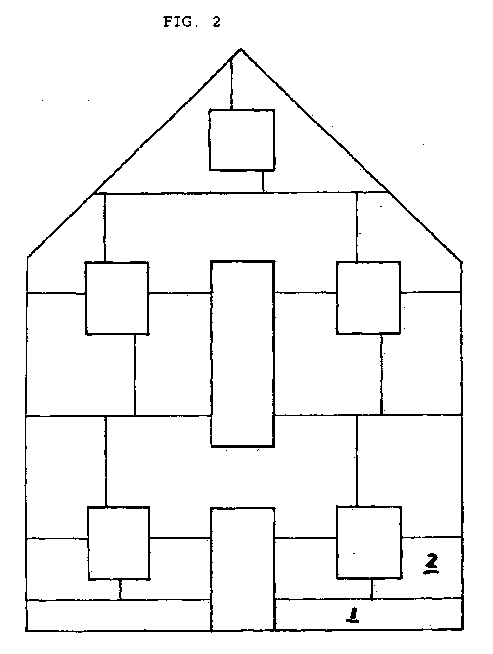

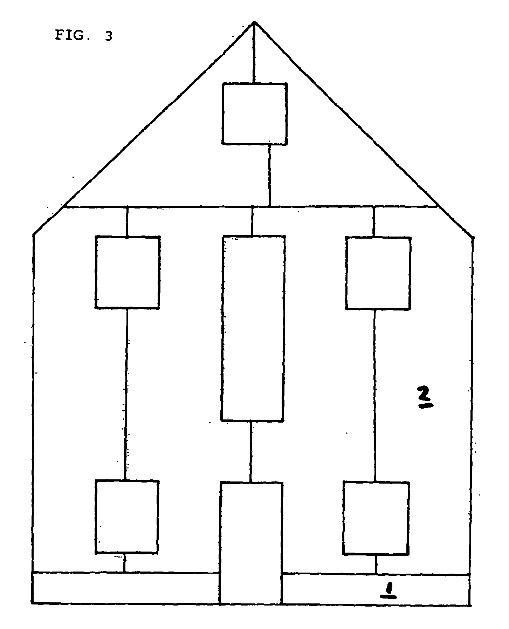

Erfindungsgemäß werden die Dämmplatten individuell an die Gebäudesituation angepasst. Besondere Wichtigkeit hierbei ist Größe und Anzahl der Öffnungsflächen von Fenstern und Türen. Wie in den Figuren 2 und 3 gezeigt, muss hierbei die Überdämmung der Rahmenprofile an Stürzen und Leibungen berücksichtigt werden. Ausgangsebene der Konfiguration der Fassadenplatten ist die Höhe der Sockelplatten 10. Wie in den Figuren 2 und 3 dargestellt, ist nach erfolgtem digitalem Aufmaß eine Rasterung der Fassade vorzunehmen. Unter Berücksichtigung von Maximalgrößen 2,00 x 6,00 m werden die Plattenformate so zusammengestellt, dass keine Plattenstöße im Bereich von Öffnungsecken entstehen. Zur Erreichung einer fugendichten Dämmschicht werden die Stoßbereiche der Platten umlaufend mit Nut- und Federsystem ausgestattet. Die Dämmplatten werden bei der Herstellung der Dämmplatten mit Klebe-Injektionskanälen ausgestattet. Ausgehend von der üblichen Anforderung eines Klebeflächenanteils von 40 - 50 % der Plattenflächen werden vorzugsweise pro m² etwa 10 Injektionskanäle mit einer mauerwerksseitigen Ausfräsung von 25 cm Durchmesser und 1,5 cm Tiefe vorgesehen. Hierdurch ist der geforderte 40 - 50% Klebeflächenanteil gewährleistet.

Bei der Anbringung der Dämmplatten wird beginnend mit den Sockelplatten die Bezugsebene der Verlegung der vorgefertigten Dämmplatten angebracht. Die Dämmplatten werden trocken, ohne Klebemörtel im Verbund des Verlegeschemas an die Fassade angesetzt und an der Fassade fixiert. Erfindungsgemäß entfällt eine zusätzliche Ausrichtung der Dämmplatten weitgehend, da diese mauerwerksbündig anliegen und mit handelüblichen Tellerdübeln fixiert werden können. Nach Anbringung und Ausrichtung der Fassadenelemente wird die Dichtigkeit der Anschlussbereiche an Dach, Fenster- und Türen überprüft, bzw. nachgebessert.

Die Verklebung der Dämmplatten erfolgt mittels Injektionspistole in die Injektionsöffnungen. Hierbei können sowohl mineralische Klebemörtel, wie auch Klebstoffe auf PU-Schaumbasis zum Einsatz kommen. Mineralische Klebemörtel können mittels Silo-/Maschinentechnik mit dosierbaren Injektionspistolen eingebracht werden. Nach Einbringung des Klebemörtels werden die Injektionskanäle mittels Dämmstoff-Verschlussstopfen geschlossen.

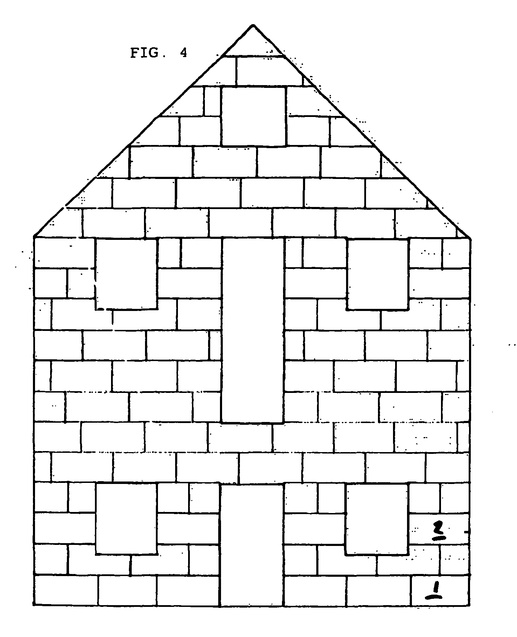

Wie in Figur 4 dargestellt, werden bei einer Dämmung mit konventionellen Plattenformaten 112 Einzelplatten benötigt. In Figur 2 ist eine Dämmschicht unter Verwendung von großformatigen Platten dargestellt. Unter Verwendung dieses Verlegeschemas würden lediglich 16 Einzelplatten benötigt werden. In Figur 3 ist eine Aufrasterung in der Maximalgröße der Plattenformate dargestellt. Hierbei verringert sich die Anzahl der benötigten Einzelelemente auf lediglich 6 Stück. Entsprechend wird auch die für die Anbringung der Platten benötigte Arbeitszeit dramatisch verkürzt. Gleichzeitig wird die Qualität der Dämmung durch das wirksame Vermeiden von Wärmebrücken, im Vergleich zu herkömmlichen Dammschichten wesentlich erhöht.

## Patentansprüche

1. Verfahren zur Außendämmung eines Gebäudes bei dem Dämmkörper hergestellt werden und auf den Außenwänden des Gebäudes befestigt werden, wobei das Verfahren die folgenden Schritte umfasst:
(a) Erfassung der dreidimensionalen Geometrie zumindest eines Teils der Außenseite von mindestens einer Außenwand mit einer Erfassungseinrichtung;
(b) Ermittlung von Basisdaten, die die dreidimensionale Geometrie der zu dämmenden Außenwand definieren;
(c) Ermittlung von Dämmschichtdaten unter Verwendung der Basisdaten, wobei die Dämmschichtdaten zumindest die Größe und Innenoberfläche der herzustellenden Dämmschicht definieren, wobei die Dämmschicht auf der Grundlage der Basisdaten modelliert wird ;
(d) Ermittlung von Dämmkörperdaten aus den Dämmschichtdaten, wobei die Dämmkörperdaten die dreidimensionale Geometrie eines Dämmkörpers definieren;
(e) Herstellung von Dämmkörpern unter Verwendung der Dämmkörperdaten;
(f) Befestigung der Dämmkörper auf den Außenwänden des Gebäudes unter Verwendung von Dämmschichtdaten.

2. Das Verfahren nach Anspruch 1, wobei die Erfassungseinrichtung ein 3D-Laserscanner ist, und/oder wobei die Auflösung der Erfassungseinrichtung im Bereich von höchstens 3 mm liegt.

3. Verfahren nach einem der vorstehenden Ansprüche, wobei die Erfassung der dreidimensionalen Geometrie der Außenseite einer zu dämmenden Gebäudewand mehrmals wiederholt wird und die Ergebnisse gemittelt werden, und/oder wobei die Erfassung der dreidimensionalen Geometrie der Außenseite einer zu dämmenden Gebäudewand von verschiedenen Standpunkten der Erfassungseinrichtung erfolgt.

4. Verfahren nach einem der vorstehenden Ansprüche, wobei die Basisdaten eine Punktwolke definieren und/oder wobei die Basisdaten zur Ermittlung von Dämmschichtdaten über ein Datennetzwerk übertragen werden.

5. Verfahren nach einem der vorstehenden Ansprüche, wobei eine Klebemörtelschicht bei der Ermittlung von Dämmschichtdaten unter Verwendung der Basisdaten berücksichtigt wird.

6. Verfahren nach einem der vorstehenden Ansprüche, wobei bei der Ermittlung der Dämmkörperdaten Injektionskanäle für Klebemörtel berücksichtigt werden und/oder wobei bei der Ermittlung der Dämmkörperdaten die Größe der Dämmkörper im Rahmen vorgegebener Randbedingungen maximiert wird, und/oder wobei bei der Ermittlung der Dämmkörperdaten Fugen mit einer Breite von mehr als 2 mm zwischen benachbarten Dämmkörpern in der Dämmschicht vermieden werden.

7. Verfahren nach Anspruch 6, wobei die Dämmkörperdaten gewährleisten, dass benachbarte Dämmkörper ineinander greifen.

8. Verfahren nach einem der vorstehenden Ansprüche, wobei die Ermittlung der Dämmkörperdaten von einer Bibliothek von Standarddämmkörpern ausgeht.

9. Verfahren nach einem der vorstehenden Ansprüche, wobei bei der Ermittlung der Dämmkörperdaten Fugen zwischen benachbarten Dämmkörpern in der Dämmschicht vermieden werden.

10. Verfahren nach einem der vorstehenden Ansprüche, wobei die Herstellung von Dämmkörpern in einem CAM-Verfahren erfolgt.

11. Verfahren nach einem der vorstehenden Ansprüche, wobei das Verfahren ferner ein Aufbringen einer Armierung auf mindestens zwei Dämmkörper umfasst, die auf den Außenwänden des Gebäudes befestigt sind.

12. Verfahren nach Anspruch 11, wobei das Verfahren ferner ein Aufbringen einer Putzschicht auf die Armierung umfasst.

13. Verfahren nach einem der vorstehenden Ansprüche, wobei vor der Herstellung der Dämmkörper vorläufige Dämmkörperdaten über ein Datennetzwerk einem Benutzer zur Kontrolle zugänglich gemacht werden, und die Herstellung von Dämmkörpern unter Verwendung der von dem Benutzer veränderten Dämmkörperdaten erfolgt.

14. Verfahren nach einem der vorstehenden Ansprüche, wobei die Dämmkörper aus Polystyrolschaum bestehen.

15. Verfahren nach einem der vorstehenden Ansprüche, wobei die Herstellung der Dämmkörper durch Zuschneiden von Dämmkörperblöcken erfolgt.

## Claims

1. Method for externally insulating a building in which insulating bodies are produced and fixed onto the external walls of the building, wherein the method comprises the following steps:
(a) determining the three-dimensional geometry of at least one part of the exterior of at least one external wall by means of a detecting device;
(b) determining base data which defines the three-dimensional geometry of the external wall to be insulated;
(c) determining insulating layer data by using the base data, wherein the insulating layer data defines at least the size and inner surface of the insulating layer to be produced, wherein the insulating layer is modelled on the basis of the base data,
(d) determining insulating body data from the insulating layer data, wherein the insulating body data defines the three-dimensional geometry of an insulating body;
(e) producing insulating bodies by using insulating body data;
(f) securing the insulating bodies to the external walls of the building with the use of insulating layer data.

2. Method according to claim 1, wherein the detecting device is a 3D laser scanner and/or wherein the resolution of the detecting device is in the region of at most 3 mm.

3. Method according to any one of the preceding claims, wherein the determination of the three-dimensional geometry of the exterior of a building wall to be insulated is repeated many times and the results are averaged and/or wherein the determination of the three-dimensional geometry of the exterior of a building wall to be insulated is performed from different standpoints of the detecting device.

4. Method according to any one of the preceding claims, wherein the base data defines a scatter diagram and/or wherein the base data for determining insulating layer data are transmitted through a data network.

5. Method according to any one of the preceding claims, wherein an adhesive mortar layer is taken into consideration when determining the insulating data with the use of the base data.

6. Method according to any one of the preceding claims, wherein when determining the insulating body data injection channels for adhesive mortar are taken into consideration and/or wherein when determining the insulating body data the size of the insulating bodies is maximised within the scope of predefined boundary constraints, and/or wherein when determining the insulating body data joints with a width of more than 2 mm are avoided between adjacent insulating bodies in the insulating layer.

7. Method according to claim 6, wherein the insulating body data ensures that adjacent insulting bodies grip inside one another.

8. Method according to any one of the preceding claims, wherein the determination of insulating body data comes from a library of standard insulating bodies.

9. Method according to one of the preceding claims, wherein when determining the insulating body data joints are avoided between adjacent insulating bodies in the insulating layer.

10. Method according to any one of the preceding claims, wherein the insulating bodies are produced by means of a CAM method.

11. Method according to any one of the preceding claims, wherein the method also comprises the application of a reinforcement onto at least two insulating bodies which are secured onto the external walls of the building.

12. Method according to claim 11, wherein the method also comprises the application of a rendering layer onto the reinforcement.

13. Method according to any one of the preceding claims, wherein prior to the production of the insulating bodies temporary insulating body data is made accessible to the user via a data network for checking and the insulating bodies are produced using the insulating body data modified by the user.

14. Method according to any one of the preceding claims, wherein the insulating bodies are made of polystyrene foam.

15. Method according to any one of the preceding claims, wherein the insulating bodies are produced by cutting insulating body blocks to size.

## Revendications

1. Procédé d'isolation extérieure d'un bâtiment, selon lequel des corps isolants sont fabriqués et sont fixés sur les murs extérieurs du bâtiment, étant précisé que le procédé comprend les étapes qui consistent :
(a) à relever la géométrie en trois dimensions d'une partie au moins du côté extérieur d'au moins un mur extérieur à l'aide d'un dispositif de relevé ;
(b) à déterminer des données de base qui définissent la géométrie en trois dimensions du mur extérieur à isoler ;
(c) à déterminer des données de couche isolante en utilisant les données de base, étant précisé que les données de couche isolante définissent au moins la taille et la surface intérieure de la couche isolante à fabriquer, étant précisé que la couche isolante est modélisée sur la base des données de base ;
(d) à déterminer des données de corps isolants à partir des données de couche isolante, étant précisé que les données de corps isolants définissent la géométrie en trois dimensions d'un corps isolant ;
(e) à fabriquer des corps isolants en utilisant les données de corps isolants ;
(f) à fixer les corps isolants sur les murs extérieurs du bâtiment en utilisant les données de couche isolante.

2. Procédé selon la revendication 1, étant précisé que le dispositif de relevé est constitué par un scanner laser en trois dimensions et/ou que la résolution du dispositif de relevé est de l'ordre de 3 mm au maximum.

3. Procédé selon l'une des revendications précédentes, étant précisé que le relevé de la géométrie en trois dimensions du côté extérieur d'un mur de bâtiment à isoler est répété plusieurs fois et que les résultats font l'objet d'une moyenne, et/ou étant précisé que le relevé de la géométrie en trois dimensions du côté extérieur d'un mur de bâtiment à isoler se fait à partir de différentes positions du dispositif de relevé.

4. Procédé selon l'une des revendications précédentes, étant précisé que les données de base définissent un nuage de points et/ou que les données de base sont transmises par l'intermédiaire d'un réseau de données pour déterminer des données de couche isolante.

5. Procédé selon l'une des revendications précédentes, étant précisé qu'une couche de ciment-colle est prise en compte lors de la détermination de données de couche isolante à l'aide des données de base.

6. Procédé selon l'une des revendications précédentes, étant précisé que lors de la détermination des données de corps isolants, des canaux d'injection pour le ciment-colle sont pris en compte, et/ou que lors de la détermination des données de corps isolants, la taille des corps isolants est maximalisée dans le cadre de conditions marginales prédéfinies, et/ou que lors de la détermination des données de corps isolants, des joints d'une largeur supérieure à 2 mm entre des corps isolants voisins, dans la couche isolante, sont évités.

7. Procédé selon la revendication 6, étant précisé que les données de corps isolants garantissent que des corps isolants voisins s'interpénètrent.

8. Procédé selon l'une des revendications précédentes, étant précisé que la détermination des données de corps isolants provient d'une bibliothèque de corps isolants standard.

9. Procédé selon l'une des revendications précédentes, étant précisé que lors de la détermination des données de corps isolants, des joints entre des corps isolants voisins, dans la couche isolante, sont évités.

10. Procédé selon l'une des revendications précédentes, étant précisé que la fabrication de corps isolants se fait avec un procédé de FAO.

11. Procédé selon l'une des revendications précédentes, étant précisé que le procédé comprend par ailleurs l'application d'une armature sur au moins deux corps isolants qui sont fixés sur les murs extérieurs du bâtiment.

12. Procédé selon la revendication 11, étant précisé que le procédé comprend par ailleurs l'application d'une couche d'enduit sur l'armature.

13. Procédé selon l'une des revendications précédentes, étant précisé qu'avant la fabrication des corps isolants, des données de corps isolants provisoires sont rendues accessibles à un utilisateur par l'intermédiaire d'un réseau de données, pour un contrôle, et que la fabrication de corps isolants se fait à l'aide des données de corps isolants modifiées par l'utilisateur.

14. Procédé selon l'une des revendications précédentes, étant précisé que les corps isolants se composent de mousse de polystyrène.

15. Procédé selon l'une des revendications précédentes, étant précisé que la fabrication des corps isolants se fait par découpage de blocs de corps isolants.
